# EUROPEAN PATENT APPLICATION

(11) **EP 3 096 223 A1**
(43) Date of publication of application: **23.11.2016**
(21) Application number: 16163417.5
(22) Date of filing: 31.03.2016
(51) Int. Cl.: G06F 9/44, G06F 3/048, G06Q 10/06

(54) **APPARATUS AND METHOD FOR GENERATING AND OUTPUTTING AN INTERACTIVE IMAGE OBJECT**

(30) Priority: 19.05.2015 US 201514716226
(71) Applicant: Mitel Networks Corporation, Ottawa, ON K2K 2W7 (CA)
(72) Inventor: TAM, Terry, Ottawa, Ontario K1J 7V2 (CA); DAVIES, Jim, Arnprior, Ontario K7S 3G7 (CA)
(74) Representative: McDougall, James

(57) **Abstract**

An apparatus (1002) and method (1019) are presented for generating and outputting an interactive image object (1048) for display using a graphical user interface (1006). The interactive image object is associated with a computational workflow comprising a sequence of computational operations. The apparatus comprising a processor device (1012) configured to: determine a required computational operation for the workflow based upon a task request wherein the operation requires a user input. The processor generates the interactive image object: based upon any one or more of: the determined computational operation or required user input; and, by applying, based on context data associated with the workflow, one or more object generation rules determining the configuration of the interactive image object.

## Description

The present disclosure is in the field of workflow generation, in particular the generation and display of an interactive image object associated with a computational workflow comprising a sequence of computational operations.

Graphical User Interfaces (GUI's) exist that allow users to input data to a computer system via an interactive element. The data can be inputs as part of a workflow consisting of a number of required operations. Some existing computational workflow systems can output a graphical object as an interactive form that provides a series of sections that are navigable through tabs. These sections each have a predefined template. The graphical object is therefore displayed with a number of interactive options such as tabs to other data input sections or a plurality of data input elements in the same visible section of the form being displayed. Some of these interactive options presented to the user may be unnecessary because of the type of workflow being undertaken. Furthermore, interactive options on one or more sections of a form may be made redundant due to the requested information already being made available or inferred from another input. Existing computational workflow systems may therefore generate and store unnecessary amounts of interactive image object data for the actual required workflow process. Furthermore different GUI displays may have difficulty outputting a standard workflow graphical object due to their size or display resolution. For example, the GUI on a mobile phone may find displaying a graphical object with lots of data and features may become hard to read due to feature overcrowding or the scaling down of image elements to fit them into the same section.

According to a first aspect of the invention there is provided an apparatus for generating and outputting an interactive image object for display using a graphical user interface, the interactive image object associated with a computational workflow comprising a sequence of computational operations; the apparatus comprising a processor device configured to: determine a required computational operation for the workflow based upon a task request; the operation requiring a user input; and, generate the interactive image object: based upon any one or more of: the determined computational operation or required user input; and, by applying, based on context data associated with the workflow, one or more object generation rules determining the configuration of the interactive image object; and, output the interactive image object for display.

The apparatus may be configured such that the interactive image object, when displayed by the graphical user interface, appears as a graphical image object comprising an interactive graphical image element for receiving the user input.

The apparatus may be configured such that the object generation rules at least determine the graphical configuration of graphical image object.

The apparatus may be configured such that the object generation rules at least determine the graphical configuration of the interactive graphical image element within the graphical image object.

The apparatus may be configured such that the processor device is configured to determine the relative positions of a plurality of interactive graphical elements within the graphical image object.

The apparatus may be configured such that the task request is based on a previously received user data input.

The apparatus may be configured such that the processor device is configured to determine the context data using the task request.

The apparatus may be configured such that the processor is configured to generate the context data by extracting information from a data source.

The apparatus may be configured such that the processor is configured to determine the required computational operation using the context data.

The apparatus may be configured such that the processor is configured to:
determine a plurality of required computational operations;
assign a priority value to each of the plurality of operations;
generate the interactive image object based on the priority.

The apparatus may further comprise a communication device for transmitting the interactive image object to a remote device for display.

A system is presented comprising the apparatus as described in the first aspect and the remote device.

According to a second aspect of the present invention there is provided a method for generating and outputting an interactive image object for display using a graphical user interface, the interactive image object associated with a computational workflow comprising a sequence of computational operations; the method comprising the steps of: determining a required computational operation for the workflow based upon a task request; the operation requiring a user input; and, generating, using a processor, the interactive image object: based upon any one or more of: the determined computational operation or required user input; and, by applying, based on context data associated with the workflow, one or more object generation rules determining the configuration of the interactive image object; and, outputting the interactive image object for display.

The method may be configured such that the interactive image object, when displayed by the graphical user interface, appears as a graphical image object comprising an interactive graphical image element for receiving the user input.

The method may be configured such that the object generation rules at least determine the graphical configuration of graphical image object.

The method may be configured such that the object generation rules at least determine the graphical configuration of the interactive graphical image element within the graphical image object.

The method may be configured such that the processor device is configured to determine the relative positions of a plurality of interactive graphical elements within the graphical image object.

The method may be configured such that the task request is based on a previously received user data input.

The method may be configured such that the processor device is configured to determine the context data using the task request.

The method may be configured such that the processor is configured to generate the context data by extracting information from a data source.

The method may be configured such that the processor is configured to determine the required computational operation using the context data.

The method may be configured such that the processor is configured to: determine a plurality of required computational operations; assign a priority value to each of the plurality of operations; generate the interactive image object based on the priority.

The method may further comprise the step of transmitting the interactive image object to a remote device for display using a communication device.

A computer readable medium is presented comprising computer readable instructions configured to give effect to the method as described in the second aspect.

Embodiments of the present invention will now be described in detail with reference to the accompanying drawings, in which:
Figure 1 shows an apparatus as presented herein;
Figures 2a and 2b show examples of workflows as presented herein;
Figure 3 shows an example of a further workflow as presented herein;
Figure 4 shows an example of a graphical image object as presented herein;
Figure 5 shows an example of an image object having multiple tabs for inputting user data;
Figure 6 shows an alternative representation of the image object in Figure 5, wherein only a single tab is displayed;
Figure 7a shows an example of an image object having two tabs, wherein the left hand diagram shows the first tab and the right hand diagram shows the second tab being prominent;
Figure 7b shows an alternative graphical object for outputting the image object shown in Figure 7a;
Figure 7c shows a further alternative graphical image object for displaying a similar image object as shown in Figure 7a, wherein only the first tab is displayed in the image object;
Figure 8a shows an example of an image object having multiple tabs, wherein a first tab is prominent;
Figure 8b shows a similar output of the same graphical image object whereby the information tab at the left most side of the image object has been omitted;
Figure 9 shows a graphical image object similar to that shown in Figures 8a and 8b whereby all of the other tabs have been omitted apart from where the gas and electricity tab is shown and the other tabs have been omitted;
Figure 10 shows a graphical image object with one tab indicating the finished product or a workflow process.
Figure 11 shows a further example of an apparatus in communication with multiple portable devices
Figure 12 shows a schematic example of an interactive image object.

There is presented an apparatus 1002 for generating and outputting an interactive image object 1048 for display using a graphical user interface (GUI) 1006. The interactive image object 1048 is associated with a computational workflow 1008. The computational workflow 1008 comprises a sequence of computational operations 1010. The apparatus 1002 comprises a processor device 1012. The processor device 1012 (also referred to herein as a 'processor' 1012) is configured to determine a required computational operation 1010 for the workflow 1008 based upon a task request 1014. The required computational operation 1010 requires a user input 1028. The processor 1012 is also configured to generate the interactive image object 1048: firstly, based upon any one or more of the determined computation operation 1010 or the required user input 1028; and secondly, by applying, based on context data associated with the workflow 1008, one or more object generation rules determining the configuration of the interactive image object 1048. The processor 1012 is further configured to output the interactive image object 1048 for display.

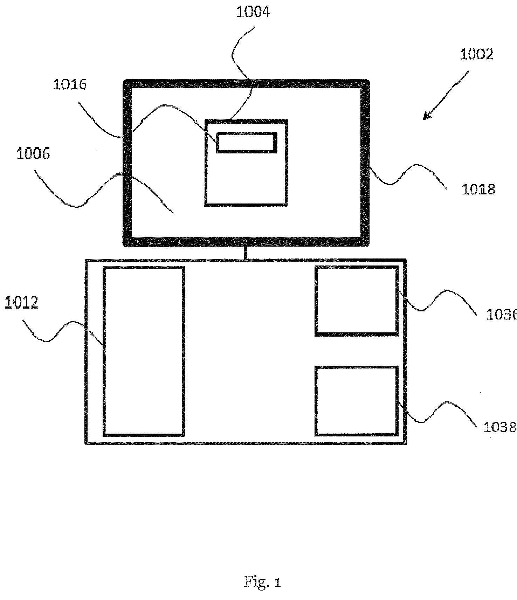

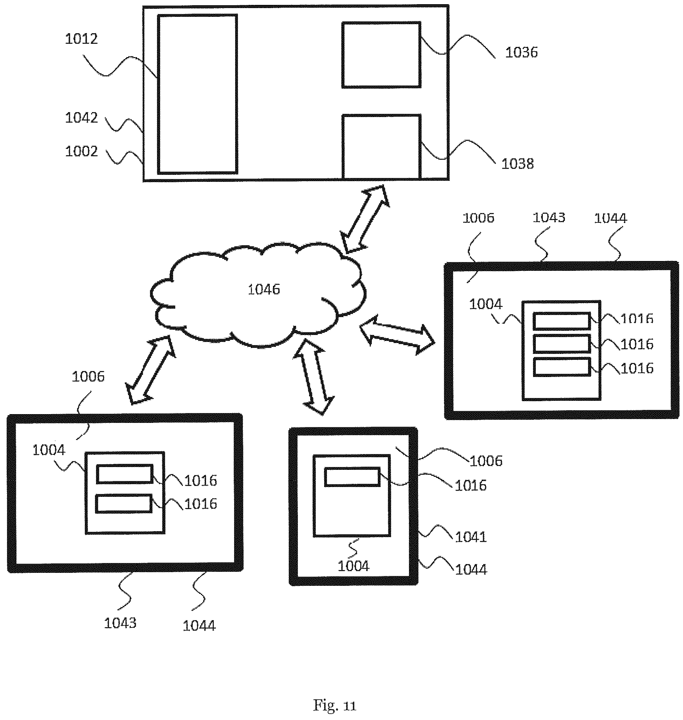

The processor 1012 may, for example, output the interactive image object 1048 for display by passing the interactive image object 1048 (or data associated with the object) to one or more display devices 1018 that form part of the apparatus 1002 as shown in figure 1. Additionally or alternatively the apparatus 1002 may output the interactive image object 1048 data to an output device 1038 such as a communications device, which in turn sends the interactive image object 1048 to one or more remote devices (such as portable device 1044) for display as shown in figure 11. Such portable devices 1044 may be, for example, tablets 1043 or mobile phones 1041 with a display device for hosting a GUI 1006. Each of these portable devices 1044 may have a communications device configured to receive the interactive image object 1048 and send data back to the apparatus 1002. In one example the apparatus 1002 is a server 1042 comprising one or more processor devices 1012, one or more memory devices 1036 and data input/output devices 1038. The server 1042 and the one or more portable devices may 1044 may communicate via a network 1046, for example communication using the internet. Additionally or alternatively the apparatus 1002 may be in communication with one or more static computational devices (not shown in figure 11) that have a display for hosting a GUI 1006. An example of a static device is a desktop Personal Computer (PC).

The apparatus 1002 may be part of a system. The system may comprise the apparatus 1002 and one or more remote device comprising a display 1018 for hosting a GUI 1006.

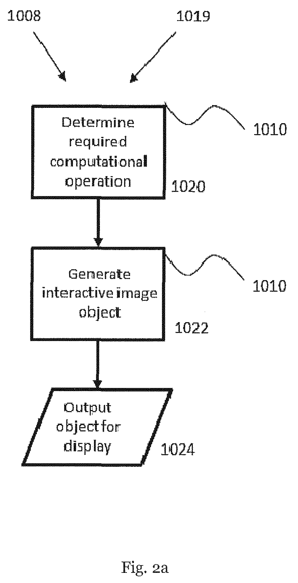

There is also presented herein a method 1019 for generating and outputting an interactive image object 1048 for display using a graphical user interface 1006, an example of which is shown in figure 2a. The interactive image object 1048 is associated with a computational workflow 1008 comprising a sequence of computational operations 1010. The method 1019 comprises the steps of, firstly, determining 1020 a required computational operation 1010 for the workflow 1008 based upon a task request 1014, where the operation 1010 requires a user input 1028. The method then, secondly, generates 1022 the interactive image object 1048: based upon any one or more of the determined computational operation 1010 or the required user input 1028 and, by applying, based on context data associated with the workflow 1008, one or more object generation rules determining the configuration of the interactive image object 1048. The method then, thirdly, outputs 1024 the interactive image object 1048 for display.

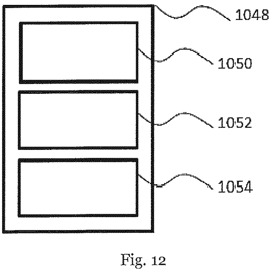

When displayed by the GUI 1006, the interactive image object 1048 appears as a graphical image object 1004 having an interactive graphical image element 1016 for receiving the user input 1028. The interactive image object 1048 comprises image data 1050 for defining the graphical image object 1004 and interactive data (such as accompanying metadata) 1052 associated with the interactive graphical image element 1016 for receiving the required user input 1028. An example of an interactive image object 1048 is shown in figure 12. The interactive image object 1048 in this example also optionally comprises other data 1054, for example data associated with the performance of the workflow that is not specifically associated with graphical objects 1004 and their interactive elements 1016. Such other data may be communication based data, for example data instructing a remote device 1044 to only output the received user data back to the server 1042 after a particular period of time. Another example of other data may be temporary or permanent code to reside on a remote device 10 that allows the processor in the remote device 1044 to locally generate a subset of workflow steps.

The apparatus 1002 therefore generates the interactive image object 1048 based upon the task request and context data associated with the workflow 1008. In this manner the apparatus 1002 may not need to upload a predefined template defining the graphical image object 1004 seen by a user viewing the GUI 1006, but instead creates interactive image objects 1048 (that defines the graphical image objects 1004) as the workflow 1008 continues from step to step. This allows the workflow 1008 to be dynamic and adaptable to what is required at each computational step 1010. Such a dynamic approach may include requiring fewer or greater numbers of user inputs being displayed to the user at any given time. For example a input task request 1014 indicates a particular computational operation 1010 is required. This computational operation 1010 requires ten user inputs 1028. Rather than displaying a form on the GUI 1006 with ten user input data fields, the apparatus 1002 subdivides the operation 1010 into a plurality of sub-operations that are completed in sequence wherein each sub-operation displays a graphical data input field 1016 for one or more of the required ten user inputs 1028. In this manner, a nominal single step in the workflow 1008 that would have been output as a single graphical image object, has been divided into multiple steps. Each workflow step in this example is associated with the generation of a new interactive image object 1048 that is sequentially output to the apparatus hosting the GUI 1006 wherein each interactive image object 1048 displays only a portion of the original ten interactive graphical image elements 1016. Such a situation may occur when, for example, context data is provided that indicates the user has been interacting with the workflow 1008 for a long time and, as such, the likelihood of the user losing concentration will have increased. By making a nominally large complex workflow step into several smaller easy to manage steps, the user is less likely to make a mistake. The adaptability of the workflow 1008 in this example may be realised by context data (used by an object generation rule) calculated by the apparatus's 1002 internal clock monitoring the workflow 1008. The rule determines the number of interactive graphical image elements 1016 for each output interactive image object 1048 as a function of workflow duration. For example, the rule may limit each interactive image object 1048 to output only up to two interactive graphical image elements 1016 when the workflow 1008 has been running for over one hour.

The apparatus 1002 and method 1019 may also provide that unnecessary data or options are not presented to the user if those options are not required for a particular computational step 1010. Creating the interactive image object 1048 to be displayed on the graphical user interface 1006 as a graphical image object 1004 (with an interactive image element 1016) without using a predefined template therefore allows the method 1019 and apparatus 1002 to not require predefined object images. This may save computational memory in storing such images. Such interactive image objects 1048 may have fewer lines of code to send to a rendering engine than an interactive image object 1048 with multiple levels of functionality. These advantages become increasingly apparent from large complex workflows 1008 where multiple steps require multiple user inputs 1028 and with workflows 1008 being operated with simple computational devices with limited graphical processing capability.

The apparatus 1002 and method 1019 also allow the workflow 1008 and display of the workflow 1008 to be adaptable to the current circumstances surrounding the execution of the workflow 1008. For example, context data may be received by the method 1019 or apparatus 1002 that indicates the user running through the workflow 1008 has poor visibility. Such context data may therefore by used by an object generation rule to limit the amount of information displayed by the graphical image object 1004 on the graphical user interface 1006. In such circumstances the one or more interactive graphical elements 1016 that the workflow 1008 outputs on a display device 1018 accommodating the graphical user interface 1006 is configured to manage the user's particular circumstances.

Other advantages and features that may be associated with the apparatus 1002 and method 1019 are described herein with different examples. Unless specifically stated to the contrary, features used in examples describing the apparatus 1002 and method 1019 may be used in any other configurations of the apparatus 1002 and method 1019 described herein. The following sections detail some examples of how the apparatus 1002 and method 1019 may be configured.

### Task Request

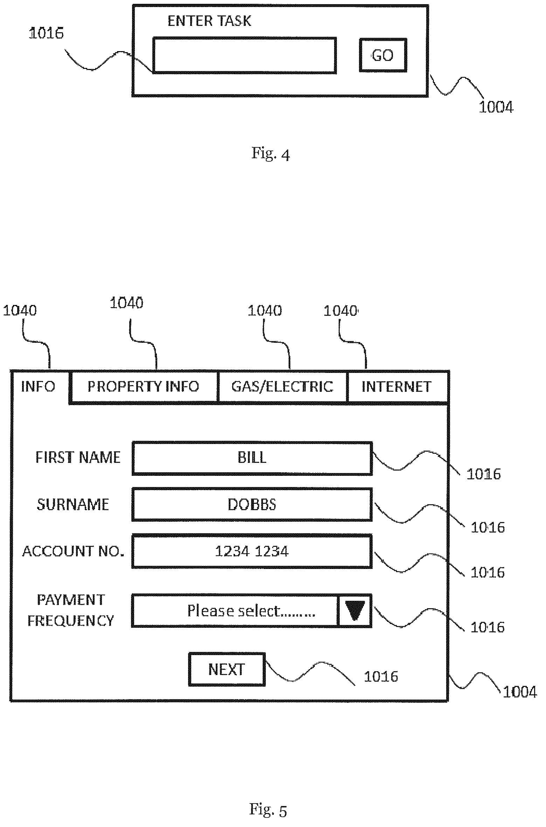

The task request 1014 may be any task request 1014 in principle that requires the workflow 1008 to take another step that requires a user input 1028. The task request 1014 may be user generated, for example being input by a user as exemplified in figure 4. This input may be a direct instruction by the user to perform a particular task or the input may be part of a previous step in the same workflow 1008, wherein the workflow 1008 processed the previous user input 1028 and generated the new task as part of the processing output. Alternatively, the task request 1014 may be automatically generated by a computer device such as the apparatus 1002 described herein. In this 'automatic' example the task generation may be performed upon receiving one or more input stimuli such as a user turning on a computer device or another input such as a particular time being reached that signifies the workflow 1008 should be started. Task requests 10014 may include a plurality of sub-tasks. Other examples of task requests 1014 are described elsewhere herein.

### Computational Workflow and Computational Operations

The workflow 1008 comprises a series of activities or 'steps' that are necessary to complete an overall task. These activities comprise a plurality of computational operations 1010 performed using at least one computer device such as the processor device 1012 described herein. The required computational operation 1010 determined by the method 1019 and apparatus 1002 is a future computational operation that is necessary to complete the task associated with the task request 1014.

An overall task may be termed a global task and may have a number of task requests 1014 associated with it. For example the global task is to compute the suitability of a person for employment by a particular company. The global task includes a task for establishing the person's personality through online questions and answers (Q&A) and another task for establishing the persons background details. Each task may have a number of subtasks for example, establishing the personality data by a series of Q&A online forms that the candidate has to complete. There may therefore be a hierarchy of tasks that directly impact how computational operations 1010, hence the workflow 1008 are managed. Further to the employment example described above, the apparatus 1002 may configure the workflow 1008 depending on the time it takes for the person to complete a personality test. The test may require the candidate to complete all the sub tasks of completing each question within a set time, wherein the default state for the workflow 1008 is to generate interactive image objects 1048 that are configured to only display one graphical image object 1004 (with one interactive graphical image element 1016) at a time. If context data is determined that the user is running out of time, then the apparatus 1002 may begin to increase the number of user inputs (hence interactive graphical elements 1016) per interactive image object so that the user sees two or more questions per instance of a user interface page. In this example, context data may be determined by obtaining information about the current duration of the personality test task and comparing this data to existing data associated with the task (such as the maximum time the candidate has).

The workflow 1008 can be represented by different steps and actions including those represented by standard flowchart actions and symbols. Such flowchart symbols may relate to actions such as decision steps, start/end terminators, inputs and outputs, delays, display, manual input, and stored data. With the exception of the first steps, each step in a workflow 1008 has a specific step before it and a specific step after it (apart from the last step). The workflow 1008 may be a linear workflow wherein the first step is typically initiated by an outside initiating event. The workflow 1008 may additionally or alternatively comprise a loop structure where a first step is initiated by completion of a last or subsequent step. Some of the steps in the workflow 8 may be computational in nature in that they require a computational operation 1010 using the processor 1012. Other steps in the workflow 1008 may be non-computational in nature, for example a user inputting data into the apparatus 1002. A computational operation 1010 in the workflow 1008 may be divided into a plurality of sub-computational operations. These sub-computational operations may be required to be performed in parallel or in series. The sub-computational operations may be associated with sub-tasks as previously described wherein a sub-task of the main task request 1014 may require a plurality of operations to be computed sequentially or in parallel.

### User Input

As described above, at least one required computational operation 1010 determined by the method 1019 and apparatus 1002 requires a user input 1028. This user input 1028 may be any input in principle that is accepted by the apparatus 1002 or method 1019 and interacts via the interactive graphical image element 1016. A user may use any input device 1038 to input the information or data into the workflow 1008 via the interactive graphical image element 1016. Input devices 1038 may include one or a combination of any of: a touch sensitive portion of the graphical user interface 1006, a mouse, a tracker ball, a keyboard or keypad, a microphone interacting with speech to text recognition software. The user input 28 may be any of, but not limited to, a selection of a check box, the selection of a particular button or icon or other graphical element associated with the interactive graphical image element 1016 on the graphical user interface 1006 by clicking a pointing device such as a mouse or typing a string of characters such as words, numbers or an alphanumeric composition of characters.

### Graphical User Interface (GUI)

The graphical user interface 1006 is, in principle, any program interface that utilises a graphical display 1018 providing capability to allow a user to interact with the workflow 1008. Typically the graphical user interface 1006 is a type of interface that allows users to interact with electronic devices of the apparatus 1002 (such as the processor 1012) through graphical icons and visual indicators. The actions performed in a graphical user interface 1006 are typically performed through direct manipulation of graphical elements displayed by a display device 1018.

### Apparatus

The apparatus 1002 comprises the processing device 1012 and optionally any other electronic or optical devices, such as electronic devices providing the graphical user interface 1006 (such as a display device 1018 incorporating a touch pad or touch screen or other input devices). The apparatus 1002 may also include other computational devices such as a memory device 1036 and input/output circuitry and devices 1038, for example as shown in Figures 1 and 11.

The processor device 1012, and optionally other computational elements that interact with the processing device 1012, may be configured to provide one or more different computational engines. These computational engines are configured to perform certain aspects of the workflow 1008. In one example, the computational engines may be provided via software modules or elements of software modules and/or hardware.

The processor device 1012 may be part of a central processing unit (CPU). The central processing unit may comprise an arithmetic logic unit (ALU) that performs arithmetic and logic operations. The CPU may also comprise hardware registers that supply operands to the ALU and store the results of the ALU operations. The central processing unit may also comprise a control unit that fetches instructions from memory 1036 and executes them by directing the coordinated operations of the ALU, registers and other computational components. An example of a CPU is a microprocessor, for example one contained on a single integrated circuit (IC) chip. An IC that contains a CPU may also contain memory 1036, peripheral devices (for example input/output devices 38) and other components of a computer device. Such integrated devices may also be termed 'microcontrollers'. The apparatus 1002 may also comprise a graphics processing unit (GPU). The GPU is a purpose built device that assists the CPU in performing complex rendering calculations.

The graphical user interface 1006 outputs data for display using at least a display device 1018. The display device 1018 may in principle be any device that displays characters or graphics representing data. A display device 1018 may output data in 2D and/or 3D format. An example of a 2D display device 1018 is a computer display screen. An example of a 3D display device 1018 is a 2D display viewed with external optical apparatus such as polarised glasses which together produce a 3D effect to the user wearing the glasses. Another example of a 3D display device 1018 is a volumetric display device that is a graphical display device 1018 that forms a visual representation of an object in three physical dimensions.

### Interactive Image Object

The interactive image object 1048 is the data generated by the processor 1012 and used to display (via the GUI) one or more graphical image objects 1004 with one or more interactive graphical image elements 1016. The interactive image object 1048 provides the required data that enables the interactive graphical image element 1016 to accept a user input 1028. The interactive image object 1048 may therefore comprise data 1048 associated with the graphical make-up of the graphical image object 1004, for example sizes, shapes, colours and other such configurations when the interactive image object 1048 is displayed using the graphical user interface 6.

The interactive image object 1048 may be created in any suitable way including creating an image data file or scene file containing code for producing the graphical image object 1004. The generation of the image data or image code of the interactive image object 1048 may be achieved using a scene generation engine. The interactive image object 1048 may also comprise metadata associated with the graphical image object 1004. Such metadata may include data 1052 providing interactivity between the user and the computational workflow 1008 allowing the user input 1028 to be input via the interactive graphical image element 1016. The image data 1050 used to form the graphical image object 1004 and the interactive graphical image element 1016 is typically passed as one or more scene files containing the scene data to a rendering engine.

Examples of the interactive graphical image element 1016 include a text box or a check box wherein other image objects of the graphical image object 1004 may wrap at least partially (preferably fully) around the interactive graphical image element 1016 thereby creating a "theme". This theme may resemble an interactive form that the user can interact with.

Figure 4 shows an example of a graphical image object 4 having two interactive graphical image elements 1016 that a user can interact with by providing user input 1028. The graphical image object 1004 is shown to comprise the text "Enter Task" above an element 1016 that provides a text entry field. The text entry interactive element 1016 is adjacent a further interactive graphical image element 1016 labelled with the word "GO". The interactive image object 1048 that was rendered to produce this graphical image object 1004 comprised image data 1050 for defining the image and interactive metadata 1052 defining the interactivity portions of the image object 1004.

In principle the interactive graphical image element 1016 may be the entire graphical image object 1004. A graphical image object 1004 comprising an interactive image element 1016 may be seen, in some examples as a form whereby the user can provide the user input 1028. In principle there may be more than one interactive graphical image element 1016 associated with the graphical image object 1004 as discussed above and shown in in figure 4. Furthermore the processor device 1012 may be configured generate an interactive image object 1048 to comprise one or more graphical image objects 1004 wherein each graphical image object 4 comprises one or more interactive graphical image elements 1016.

The image data 1050 (of the interactive image object 1048) used to form the visual appearance of the graphical image object 1004 may be located with or formed as part of a set of data for outputting a larger graphical image, the graphical image object 1004 forms a part of the larger image. An example of this is the graphical output of a operating system desktop whereby a portion of the graphical output is associated with the graphical image object 1004 whilst the rest of the data used to define the display image is attributable to the appearance of the background operating system desktop.

The image data 1050 of the interactive image object 1048 may be defined in any suitable way including raster graphics coding (digital image comprising a grid of pixels) and/or vector graphic coding (where representation of the graphical object 1004 is made via items such as lines, arcs, circles and rectangles and achieved through mathematical formulas such as post script).

The interactive graphical image element 1016 may also be known as an interface element, a graphical control element or a widget. The element 1016 is an element of interaction in a graphical user interface 1006 that a user interacts with through direct manipulation to read or edit information about the workflow 1008. Examples of such elements 1016 include but are not limited to text input boxes, buttons such as check boxes, sliders, list boxes and drop down lists. Each type of element 1016 facilitates a specific type of user-workflow interaction, and appears as a visible part of the workflow's graphical user interface 1006 as rendered by a rendering engine.

### Context Data Associated with the Workflow

Context data is associated with the workflow 1008 and may, in principle, be any information associated with or relevant to the current step in a particular task. This association may be current information or historical information. For example, context data could be the number of user inputs 1028 required for the required operation 1010. Context data may be obtained in any way in principle including, but not limited to: determine the context data using the task request; receive the context data from an input device such as a keyboard or through a communications device receiving data from an external data source;

Context data may be at least partially generated by the apparatus 1002 by performing a calculation using various different data (for example determining an output display capacity by comparing and evaluating information about the physical display size of the portable device and information about the associated graphics card linked to the display) and/or extracting or mining information from one or more data sources (for example a user manually inputs a text string describing the workflow, the apparatus examines the string and searches for certain keywords, the combination of the keywords found are used to generate the context data.

Context data may be used, at least in part, to determine the required computational operation.

Context data may be associated with the current task or task request 1014. In this example the context data may include data associated with previous (historical) user inputs 1028 provided within the workflow 1008.

Context data may also be associated with the graphical user interface 1006. An example of this type of context data could be the display 1018 size or resolution used by the graphical user interface 1006.

Context data may also be associated with the user providing the user input 1028. An example of this could be the sex of the user, wherein the sex dictates where the interactive graphical image element 1016 is located display device 1018 used by the graphical user interface 6. This may be important is the screen is very wide, due to men's and women's different levels of peripheral vision. Hence this context data may be used by an element 1016 layout rule to put all the elements 1016 in a centre stacked formation for a man, but allow the same elements 1016 to be distributed width ways on the screen for a woman.

### Object Generation Rules

The object generation rules used by the method 1019 and apparatus 1002 described herein, maybe any command or data structure that provides one or more instructions and/or one or more limiting parameters to create the interactive image object 1048. The rules may include details as to how the processor 1012 generates the image data portion of the interactive image object 1048 that corresponds to the appearance of the graphical image object 1004. This may include the graphical configuration or layout of the interactive graphical element 1016, for example where an element 16 is positioned about the graphical image object 1004, the size of the element 16 (for example, how large the element 1016 is either absolutely or relatively compared to other graphical objects), and any other rules or information determining the configuration of the interactive graphical image element 1016 within or about the graphical image object 1004.

The rules may include details for the rendering of any metadata 1052 within the interactive image object 1048 associated with the interactive graphical image element 1016. An example for the rendering of such metadata is where an interactive "hot-spot" is provided for the interactive graphical image element 1016. The "hot-spot" being the location within the graphical environment displayed by the graphical user interface 1006 where the user must select using an input device 1038 (such as a pointing device) to cause the activation of the interactive graphical image element 1016.

The object generation rules may be stored on any suitable electronic or optical storage device such as a memory device 1036 associated with the apparatus 1002 (for example being part of the apparatus). The rules may additionally or alternatively be stored on a remote memory device such as being contained within a cloud computing environment. The rules may be contained in a rules database 1032 that is accessed by the processor device 1012 in order to generate the interactive image object 1048.

The rules may be conditional or unconditional in nature. The apparatus 1002 and method 1019 may be configured to conditionally select a rule for application. The conditional application of a rule may be based upon context data. Additionally or alternatively, some rules may be unconditionally applied.

The rules themselves may also have conditional or unconditional outputs or instructions that are subsequently used by the apparatus 1002 and method 1019 to generate the interactive image object 1048. A rule with a conditional output is one where the output instruction of the rule is conditional upon an input (such as context data), hence the rule can output a plurality of different instructions used by the processor 1012 to generate the interactive image object 1048.

The apparatus 1002 and method 1019 may therefore provide any of: the conditional application of an unconditional rule; a conditional application of a conditional rule; an unconditional application of an unconditional rule; or an unconditional application of a conditional rule.

A conditional application of an unconditional rule could be, for example, when it is determined, from context data, that only a single user input 1028 is required for a particular operation 1010. In this example the rule of "single tab only" is referenced and used to create the interactive image object 1048.

An example of how the output of a rule is conditional is where context data is supplied that shows that the display screen 1018 size is limited. In this example the rule may have a number of conditions of how the object 1004 is to be output. This rule may stipulate that: if the screen size is less that 600x600 pixels and the type of user input 1028 is a text string (for example a first and last name) then use of two vertically stacked user input text boxes to input the first and corresponding second half of the string are used; but if the screen size is greater than or equal to 600x600 pixels then the rule instructs to display a single textbox for inputting the whole string (i.e. a single textbox for inputting the first and last name).

### Examples of workflows according to the method as described herein

Figure 2a shows an example of a method 1019 for a workflow 8 wherein the workflow comprises the computation operation 1010 step of determining the required computation operation 1020 as previously described above. After determining the required computation operation (the operation requiring the user input 1028) the workflow 1008 then generates 1022 the interactive image object 1048 for the display. After generating the object 1008 data for display as described above, the workflow then outputs 1024 the interactive image object 1048 for display.

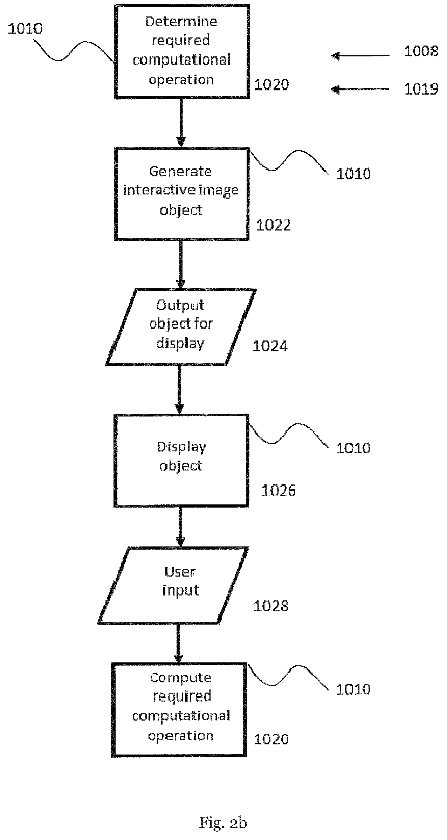

Figure 2b shows a further example of a workflow 1008 similar to figure 2a whereby after the step 1024 of outputting the interactive image object 1048 for display, the workflow 1008 then displays 1026 the interactive image object 1048, the user then provides a user input 1028 via the interactive graphical image element 1016 of the graphical image object 1004. Upon receiving the user input 1028, the workflow 1008 then computes the required computational operation at step 1030.

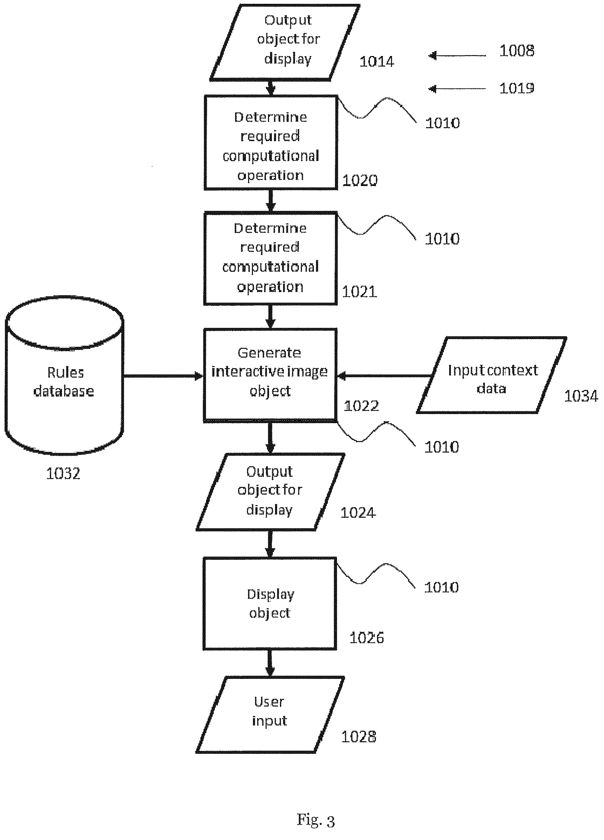

Figure 3 shows a workflow 1008 according to the method 1019 described herein when there is provided an input task request 1014 whereby steps 1020 and 1021 correspondingly determine the required computational operation 1010 and determine the required user input 1028 associated with the required operation 1010. The determined operation and user input 1028 are provided into the next step 1022 which generates the interactive image object 1048. A rules database 1032 is used to provide rules for the generation of the interactive image object 1048. Furthermore, context data is input at step 1034 into step 1022 wherein one or more object generation rules are applied based on the context data. The interactive image object 1048 generated at step 1022 is then output for display at step 1024. Step 1026 is a computational operation that displays the interactive image object 1048 via the graphical user interface 1006 through which the user provides the user input. Similarly to figure 2b, the next step in the workflow for figure 3 could also be the step 1030 of computing the required operation.

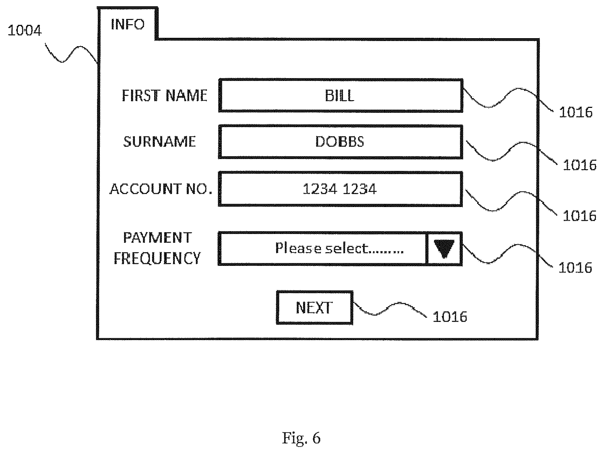

Figure 5 shows an example of a graphical image object 1004 comprising four tabs 1040. Such an object 1004 may be displayed as part of a rental property program where a user is presented with a different user interface pages to navigate via the tabs 1040. The user fills in the text boxes with data and then selects the element 1016 labelled 'next' to take them to the next tab 1040 or to another new interface page. Instead of displaying a complex graphical object 1004 with multiple tabs 1040, the method 1019 and apparatus 1002 may sequentially display each tab 1040 to the user, for example as shown in figure 6, which shows no tabs 1040. The selection of 'next' in this example will cause the processor 1012 to generate a new graphical image object for separately displaying another one of the tabs 1040.

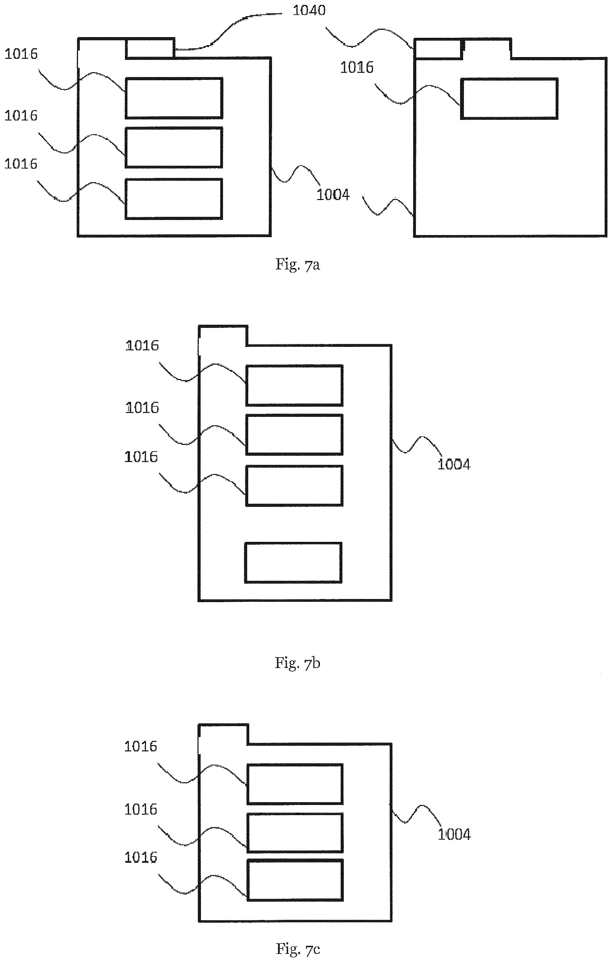

Figure 7a shows an example of a nominal template based GUI with multiple tabs 1040, wherein four interactive elements 1016 are split between the two tabs 1040. Figure 7b shows an example where the apparatus 1002 uses context data (for example the display screen being large), applied to an object layout rule, to change the layout to have all of the elements 1016 on one tab. Figure 7c shows an example where the apparatus 1002 uses context data (for example the display screen being small), applied to an object layout rule, to change the layout to have each tab sequentially displayed with figure 7c showing the first of those original tabs.

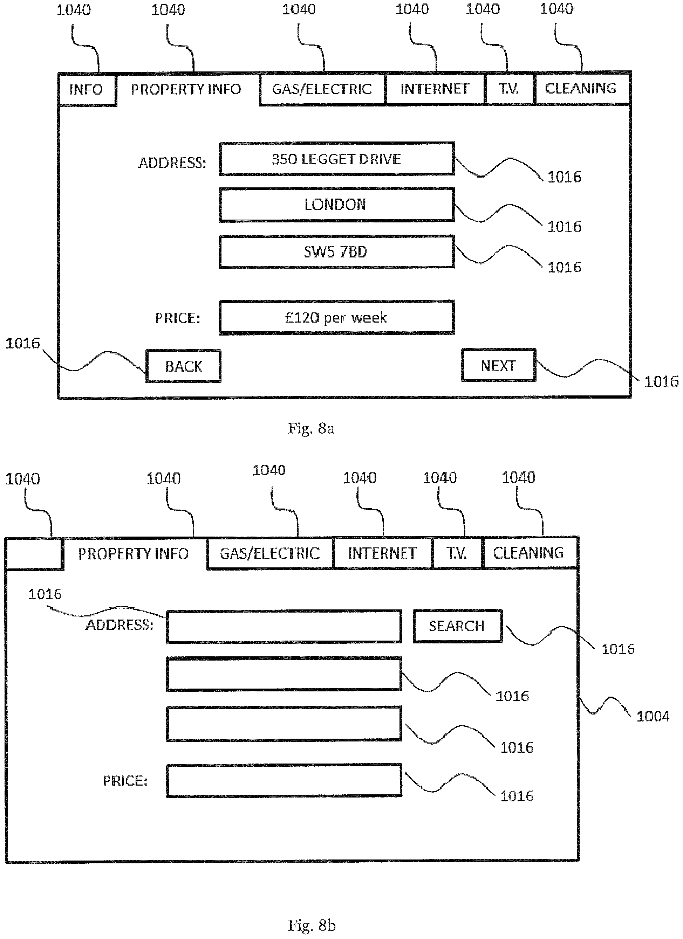

Figure 8a shows a further example of a template that may be used for a rental property workflow 1008. The template may have multiple tabs 1040, each having multiple input elements 1016. Figure 8b shows an example where context data indicates that the data requested by the 'INFO' tab has already been input elsewhere in the workflow 1008 or has been extracted from another information source. In this example the apparatus does not provide a tab for the 'INFO'.

In the example shown in Figure 8b the user is provided with an address search function. The resulting found data may, in one example, be used to determine the data required in the 'INFO' tab 1040. Therefore the workflow 1008 may not display this tab 1040 until the resulting searched data is obtained. If the INFO data can be derived from using the address data (for example by looking up the address on a national register of voters), then the INFO tab is left removed, however if the INFO data cannot be obtained in this way, the tab is dynamically inserted back into the user interface similar to figure 8a.

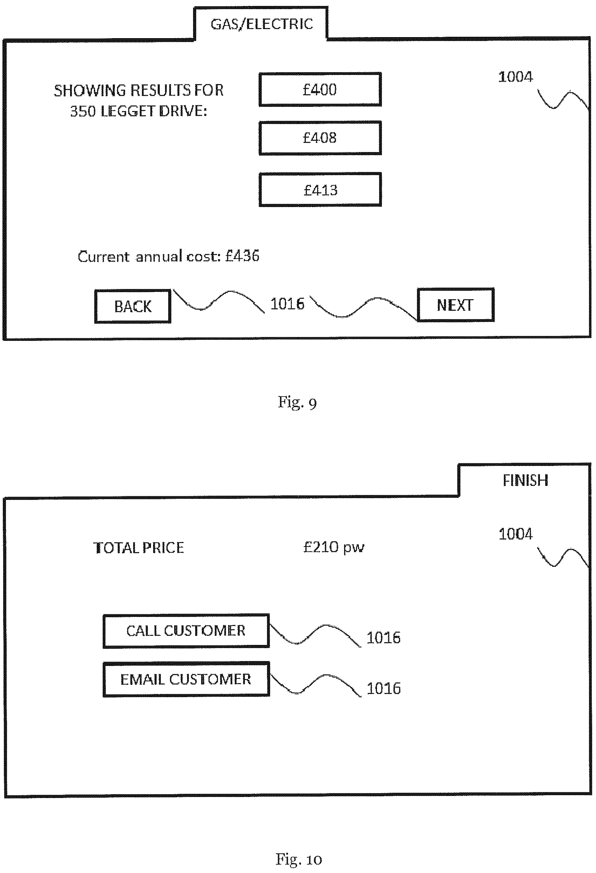

Figure 9 shows an alternative example to how tabs 1040 in this example could be displayed. In this example, the tabs 1040 are displayed sequentially. This workflow adaption may, for example, be initiated if the INFO data entered on the first tab indicated the user was very old and not used to using computers. Upon receiving this data, the apparatus 1002 uses this as context data, used by a layout rule to minimise the complexity in the GUI 1006.

Figure 10 shows an example of a GUI page at the end of the rental workflow 1008 where all the user data has been input into the tabs 1040 and a new GUI page is displayed with the results of the global computation with optionally selectable elements 1016 that the user can select outside of compulsory operations of the workflow 1008.

In another example, the workflow 1008 may require a number of types of user input split into different subject categories or 'themes', each theme requiring one or more user inputs. Instead of having a single predefined template for outputting on a GUI with each theme is tabbed and the tab graphical contents are predefined; the method 1019 and apparatus 1002 may provide a dynamic approach to providing the workflow. Rules may be used by the processor 1012 that provide a generic graphical layout unrelated to a particular theme. In one example, this rule may not be dependent on context data, for example one generic rule may require four graphical input elements 1016 for each theme. Other rules that are context dependent may be used to supplement the generation the graphical layout data 1050 in the interactive image object 1048. For example, a context dependent rule may be used that provides different layout generation instructions dependent upon the theme intended to be displayed by the GUI 1006. Using the example shown in figure 8b, the apparatus 102 or method 1019 may use the generic graphical layout rule that requires all themes to have a page with four stacked interactive graphical elements 1016. The workflow 1008 when run by the method 1019 presented herein may sequentially output each theme instead of using a multiple tabbed object, wherein each theme is separately generated as an interactive image object 1048. Also used in the generation of each interactive image object 1048 is a rule the dictates what text is to be displayed next to each of the four elements 16.

Figure 11 shows an example of an apparatus 1002 that forms part of a client-server relationship wherein the GUI 1006 is hosted by one or more remote devices 1044 (also referred to as 'GUI apparatus' in this example). The apparatus 1002 (also referred to herein as a 'server') comprises one or more processors 1012 and memory devices 1036 that operate together with other electronic components and circuitry to run one or more programs configured to provide the functionality require by the apparatus 1002 or the method 1019 as presented herein. The apparatus 1002 in this example comprises one or more communication devices 1038 configured to at least transmit data to the remote devices 1044. In turn, the GUI apparatus 1044 in this example has electronic access with one or more communication devices configured to receive data from the server 1042. Such data may be, but is not limited to an interactive image object 1048.

An example of a workflow 1008 run using such a client-server setup is a workflow 1008 for managing an installation of a communications system within a customer premises. An installation engineer may have access to a portable device 1044 having a display (for supporting a GUI), an input device (such as a touch screen), processor and memory devices, and a communications device for receiving and transmitting data to and from the server 1042. An example of such a portable device 1044 could be a mobile phone 1041 or a tablet 1043.

The server 1042 runs software for implementing the method 1019 presented herein that controls the workflow 1008 and generation of the interactive image objects 1048.

As the installation engineer performs the installation of the new system in the customer premises, they follow a workflow graphically output from a GUI 1006 displayed on the portable device display.

In this example the server 1042 may be sending workflow 1008 interactive image objects 1048 to a number of different engineers at different customer sites, each engineer having a portable device 1044. Each engineer may be performing the same type of installation (hence same global task), however the server 1042 may output a different series of workflow steps to each portable device 1044 dependent upon the context of the specific installation. This allows each engineer to interact with a custom dynamic workflow 1008 that takes to account the needs, requirements and situations of that particular installation. For example, one customer premises may be in a remote geographical area. The server therefore assesses the strength (e.g. data rate) of the communication links between itself 1042 and the portable device 1044. If the links are strong, then the workflow 1008 may be divided up into lots of smaller interactive steps (e.g. each interactive image object 1048 has one or two interactive image elements 1016) due to the ease of uploading and downloading data to and from the server 1042. However if the communication links are not strong, for example being below a threshold data rate, then the interactive image objects 1048 sent to the portable device 1044 may have a greater number of interactive image elements 1016 due to the difficulty in repeatedly sending data to the portable device 1044 (i.e. it becomes more efficient to send data in larger packets than smaller ones).

In the example above a rule may exist that uses context data concerning communication capability between the client 1044 and server 1042 and uses that data to determine the number of user inputs collected per information packet sent back to the server 1042.

Rules may be provided to determine other properties and parameters associated with the interactive image objects 1048. These other properties may be any parameter concerning the outputting (e.g. sending of the graphical image objects) for display, for example when to send the object 1048 and where to send it. In the above server example, context data may be determined or otherwise received that indicated poor data communications between a portable device 1044 and the remote server 1042 and that the portable device 1044 had a low resolution or small screen size. A task request is generated from a previous step in the workflow 1008 that requires two or more user inputs. One rule used by the processor 1012 may determine that only one interactive image element 1016 be displayed at any one time on the portable display due to screen size constraints. However another rule may determine that each interactive image object 1048 sent from the server 1042 to the portable device 1044 should contain data for outputting multiple interactive image objects 1048 due to the poor communications capabilities. The poor communication capabilities would nominally lead to an undesirable time lag in inputting user data and waiting for the next new interactive page of the workflow 1008 to be sent back. In this situation where rules may conflict, another rule may be implemented to provide a workable solution to the conflicting rules. In this example a further rule is used that constructs an interactive image object 1048 that contains instructions (for example meta data 1054 or a set of code that can be run by the portable device 1044) for sequentially outputting a plurality of graphical objects. Hence executable code is sent to locally execute a plurality of workflow steps. This data 1054 may also be configured to instruct the portable display to only send back the collected user data once all of the sequential user inputs have been collected.

In another example, the apparatus 1002 may determine a plurality of required operations and use data (such as context data) to determine a priority ranking for each of the required operations. Upon determining the priority ranking, the apparatus 1002 generates the next and subsequent graphical image objects 1048 based upon the priority ranking. For example, two operations are required, one of which requires a user input that may affect the need for the other operation. In this example the 'user input' operation is prioritised higher than the other so that the interactive image object 1048 is generated and output for this operation before the other.

The advantages and features of the disclosure are of a representative sample of embodiments only, and are not exhaustive and/or exclusive. They are presented only to assist in understanding and teach the claimed features. It is to be understood that advantages, embodiments, examples, functions, features, structures, and/or other aspects of the disclosure are not to be considered limitations on the disclosure as defined by the claims or limitations on equivalents to the claims, and that other embodiments may be utilised and modifications may be made without departing from the scope and/or spirit of the disclosure. Various embodiments may suitably comprise, consist of, or consist essentially of, various combinations of the disclosed elements, components, features, parts, steps, means, etc. In addition, the disclosure includes other inventions not presently claimed, but which may be claimed in future.'

## Claims

1. An apparatus (1002) for generating and outputting an interactive image object (1048) for display using a graphical user interface (1006), the interactive image object associated with a computational workflow comprising a sequence of computational operations;
the apparatus comprising a processor device (1012) configured to:
determine a required computational operation for the workflow based upon a task request; the operation requiring a user input; and,
generate the interactive image object:
based upon any one or more of: the determined computational operation or required user input; and,
by applying, based on context data associated with the workflow,
one or more object generation rules determining the
configuration of the interactive image object;
and,
output the interactive image object for display.

2. The apparatus (1002) as claimed in claim 1 wherein the interactive image object (1048), when displayed by the graphical user interface, appears as a graphical image object comprising an interactive graphical image element (1016) for receiving the user input.

3. The apparatus (1002) as claimed in claim 2 wherein the object generation rules at least determine the graphical configuration of graphical image object.

4. The apparatus (1002) as claimed in claim 3 wherein the object generation rules at least determine the graphical configuration of the interactive graphical image element (1016) within the graphical image object.

5. The apparatus (1002) as claimed in any preceding claim wherein the task request is based on a previously received user data input.

6. The apparatus (1002) as claimed in any preceding claim wherein the processor device (1012) is configured to do any one or more of:
I) determine the relative positions of a plurality of interactive graphical elements within the graphical image object
II) determine the context data using the task request;
III) generate the context data by extracting information from a data source;
IV) determine the required computational operation using the context data;
V) determine a plurality of required computational operations; assign a priority value to each of the plurality of operations; generate the interactive image object based on the priority.

7. A system comprising the: apparatus (1002) as claimed in any of claims 1-6 and a remote device (1044); wherein the apparatus comprises a communication device for transmitting the interactive image object to a remote device for display.

8. A method (1019) for generating and outputting an interactive image object (1048) for display using a graphical user interface (1006), the interactive image object associated with a computational workflow comprising a sequence of computational operations; the method comprising the steps of:
determining a required computational operation (1020) for the workflow based upon a task request; the operation requiring a user input; and,
generating (1022), using a processor device (1012), the interactive image object:
based upon any one or more of: the determined computational operation or required user input; and,
by applying, based on context data associated with the workflow,
one or more object generation rules determining the
configuration of the interactive image object;
and,
outputting (1024) the interactive image object for display.

9. The method (1019) as claimed in claim 8 wherein the interactive image object (1048), when displayed by the graphical user interface, appears as a graphical image object comprising an interactive graphical image element (1016) for receiving the user input.

10. The method (1019) as claimed in claim 9 wherein the object generation rules at least determine the graphical configuration of graphical image object.

11. The method (1019) as claimed in claim 10 wherein the object generation rules at least determine the graphical configuration of the interactive graphical image element (1016) within the graphical image object.

12. The method (1019) as claimed in any of claim 8-11 wherein the processor device (1012) is configured to do any one or more of:
I) determine the relative positions of a plurality of interactive graphical elements within the graphical image object;
II) determine the context data using the task request;
III) generate the context data by extracting information from a data source;
IV) determine the required computational operation using the context data;
V) determine a plurality of required computational operations; assign a priority value to each of the plurality of operations; generate the interactive image object based on the priority.

13. The method (1019) as claimed in any of claims 8-12 wherein the task request is based on a previously received user data input.

14. The method (1019) as claimed in any of claims 8-13 further comprising the step of transmitting the interactive image object to a remote device (1044) for display using a communication device.

15. A computer readable medium comprising computer readable instructions configured to give effect to the method (1019) as claimed in any of claims 8 -14.
